# EUROPÄISCHE PATENTSCHRIFT

(11) **EP 3 724 627 B1**
(45) Veröffentlichungstag und Bekanntmachung des Hinweises auf die Patenterteilung: **30.11.2022**
(21) Anmeldenummer: 18830712.8
(22) Anmeldetag: 11.12.2018
(51) Int. Cl.: G01N 1/06

(54) **MIKROTOM UND VERFAHREN ZUM HERSTELLEN VON DÜNNSCHNITTEN AUS EINER PROBE MIT HILFE EINES MIKROTOMS**
MICROTOME AND METHOD FOR PRODUCING THIN SECTIONS FROM A SAMPLE BY MEANS OF A MICROTOME
MICROTOME ET PROCÉDÉ DE FABRICATION DE COUPES MINCES À PARTIR D'UN ÉCHANTILLON À L'AIDE D'UN MICROTOME

(30) Priorität: 12.12.2017 DE 102017129537
(43) Veröffentlichungstag der Anmeldung: 21.10.2020
(73) Patentinhaber: Karlsruher Institut für Technologie, 76131 Karlsruhe (DE)
(72) Erfinder: SPOMER, Waldemar, 76532 Baden-Baden (DE); GENGENBACH, Ulrich, 75196 Remchingen (DE); HOFFMANN, Julian, 76133 Karlsruhe (DE); HOFMANN, Andreas, 76149 Karlsruhe (DE); WACKER-SCHRÖDER, Irene, 69118 Heidelberg (DE); SCHRÖDER, Rasmus, 69118 Heidelberg (DE); NESS, Leonard, J., Tucson, AZ 85745 (US); BREY, Warren, J., P., Corataro, AZ 85652 (US)
(86) Internationale Anmeldenummer: PCT/EP2018/000552
(87) Internationale Veröffentlichungsnummer: WO 2019/115007

(56) Entgegenhaltungen:
- AT-A4- 507 572
- DE-A1- 19 707 987
- DE-U- 1 993 223
- US-A1- 2015 135 917
- US-A1- 2016 231 206

## Beschreibung

Die Erfindung betrifft ein Mikrotom zum Herstellen von Dünnschnitten aus einer Probe gemäß des ersten Patentanspruchs und ein Verfahren gemäß des Anspruchs 11 zum Herstellen von Dünnschnitten aus einer Probe mit Hilfe eines vorgenannten Mikrotoms.

Ein Mikrotom ist ein Schneidwerkzeug für die Herstellung von dünnen Schnittpräparaten (Dünnschnitten). Dabei werden Proben, vorzugsweise materialwissenschaftliche Proben, biologisches Gewebe und/oder Polymere enthaltend, in einem Probenhalter fixiert und eingespannt sowie über eine Schneidkante geführt, an der die Probe schichtweise als Dünnschnitte abgeschält wird. Üblicherweise werden die einzeln abgeschälten Dünnschnitte von der Schneidkante abseits der Schneidkante direkt auf eine Flüssigkeitsoberfläche geführt, von der Schneidkante beispielsweise manuell, z.B. durch eine Wimper, oder automatisierbar, z.B. mittels eines Mikromanipulator, von der Schneidkante getrennt und über die Flüssigkeitsoberfläche auf ein Substrat oder ein Substratband geführt und aus der Flüssigkeit abgelegt.

In der Regel sind biologische Proben zum direkten Schneiden ohne jegliche Vorbehandlung unter Raumtemperatur nicht geeignet. Ihre mechanische Stabilität ist häufig nicht ausreichend, um sie zu schneiden. Als Beispiel seien hier Gewebeproben oder Muskelzellen genannt. Außerdem unterliegen biologische Proben einem Verwesungsprozess. Der erste Schritt bei der Erzeugung von Schnittserien ist daher das Fixieren der Probe, um die Verwesung zu stoppen, der zweite ein Einbetten der Probe in ein geeignetes Medium, einem Einbettmaterial vorzugsweise auf Basis eines schneidfähigen Polymers (z.B. Epoxidharz, Methacrylatharz), die zugleich eine konservierende Wirkung auf die Probe aufweisen.

Der vorgenannte Schneidvorgang wird an einer Probe üblicherweise wiederholt, womit man eine Vielzahl von seriell abgeschälten Dünnschnitten von derselben Probe und damit eine Basis für eine dreidimensionale Rekonstruktion eines Zustandes dieser Probe erhält. Die Dünnschnitte müssen dann jeweils einzeln separiert und auf Substrate oder Substratbänder abgeschieden, werden, auf denen sie seriell angeordnet einer weiteren Untersuchung wie z.B. mikroskopischen Untersuchungen zugeführt werden.

US 2014/0026683 A1 offenbart beispielsweise eine Vorrichtung mit einem Mikrotom der eingangs genannten Art, bei dem eine Probe wie vorgenannt in eine Vielzahl von Dünnschnitten überführt wird, wobei die Dünnschnitte mittels eines Substratbandes seriell aus der Flüssigkeit aufgenommen werden und mit dem Substratband aufgerollt werden. Insbesondere ist eine Ablage der Dünnschnitte auf Substratbändern mit einem erheblichen apparativen Aufwand verbunden.Ferner eignet sich dieses Verfahren aufgrund des proprietären Substrats nicht für den Einsatz von Standardsubstraten für wie z.B. Indium-Zinn-beschichtete Glassubstrate, die sowohl für Lichtmikroskopie als auch Elektronenmikroskopie und damit für Correlative Array Tomography eingesetzt werden. DE 197 07 987 A1, AT 507 572 A4, US 2015/135917 A1, US 2016/231206 A1, und DE 19 93 223 U offenbaren Mikrotome, bei denen die Schneidkante in Kontakt mit einem Flüssigkeitsvolumen ist.

Allgemein erfolgt der vorgenannte Betrieb eines Mikrotoms zum Herstellen von Dünnschnitten aus einer Probe üblicherweise manuell oder im Falle eines Einsatzes eines Substratbandes teilautomatisiert, womit eine Herstellung und Isolierung einer Vielzahl von Dünnschnitten schnell an ihre Grenzen stößt.

Davon ausgehend liegt die **Aufgabe der Erfindung** darin, ein Mikrotom so weiter zu entwickeln und vorzuschlagen, das es sich nicht nur für die serielle Herstellung von Dünnschnitten ohne die vorgenannten Einschränkungen und Nachteile eignet, sondern insbesondere auch eine Basis für eine automatisierbare Herstellung auch größerer Mengen von Dünnschnitten mit gleichbleibender Qualität bietet.

Eine weitere Aufgabe besteht darin, eine Möglichkeit zu schaffen, auch größere Anzahlen geordnet auf bevorzugt starre Substrate (ITO beschichtetes Glas oder Abschnitte von Siliziumwafern)abzuscheiden, wie sie z.B. als Objektträger für -licht- und/oder elektronenmikroskopische Nachuntersuchungen (LIM, REM etc.) einsetzbar sind.

Eine weitere Aufgabe besteht darin, eine Möglichkeit zu schaffen, auch größere Anzahlen geordnet auf bevorzugt strukturierte oder zusammengesetzte starre Substrate abzuscheiden, wie sie z.B. als Objektträger für transmissionselektronenmikroskopische Untersuchungen (TEM) einsetzbar sind.

Eine weitere Aufgabe liegt darin, ein entsprechendes Verfahren zur Herstellung von Dünnschnitten vorzuschlagen, das sich insbesondere für eine bessere Automatisierbarkeit eignet.

Die Aufgaben werden mit einem Mikrotom und einem Verfahren mit den Merkmalen des Anspruchs 1 bzw. 11 gelöst. Auf diesen rückbezogene Unteransprüche geben vorteilhafte Ausgestaltungen wieder.

Die Lösung der Aufgabe basiert auf einem Mikrotom zum Herstellen von Dünnschnitten aus einer Probe, vorzugsweise einer eingangs beschriebenen biologischen und/oder polymeren Probe.

Das Mikrotom weist einen Probenhalter zur Aufnahme der Probe auf. In diesem wird die Probe fest eingebunden, d.h. vorzugsweise gegen Kippung und/oder Verdrehung gesichert. Eine optionale Ausgestaltung sieht vor, die Probe in eine Matrix aus einem schneidfähigen Material wie z.B. eine Expoxidharzmatrix einzubinden und im Probenhalter durch Klemmung zu fixieren.

Ferner weist das Mikrotom eine Schneidkante zum Schneiden der Probe auf. Die Schneidkante ist vorzugsweise geradlinig und weist in eine vorgegebene Schnittrichtung. Schnittrichtung und die Schneidkante spannen eine Schnittebene auf. Weiter bevorzugt ist die Schneidkante horizontal angeordnet und weist nach oben, was insbesondere die nachfolgende Ausgestaltung der Überführung der Dünnschnitte auf ein Substrat mittels einer Flüssigkeitsoberfläche begünstigt.

Das Substrat ist vorzugsweise ein starres Substrat. Optionale Ausgestaltungen sehen vor, dieses Substrat auch als eine Anzahlen geordnet auf bevorzugt strukturierte oder zusammengesetzte starre Substrate auszugestalten, wie sie z.B. als Objektträger für transmissionselektronenmikroskopische Untersuchungen (TEM) einsetzbar sind. Darunter fallen z.B.
- Netz/Grids mit unterschiedlichen Abmessungen und Geometrien und/oder ultradünnen Schnittauflagen (section support),
- TEM-Grids direkt auf dem Substrat aufliegend (darauf werden Kanäle strukturiert),
- großes längliches, freitragendes streifenförmiges Grid, das in sich steif ist und einen Kanal über die ganze Fläche bildet (Gitterrost, es können auch mehrere dieser streifenförmigen Grids nebeneinander angeordnet werden),
- Substrat mit Aussparungen für TEM-Grids (runde TEM-Grids, Slot-Grids, Slot-Grids mit z.B. Membranbeschichtung (z.B. Formvar- und/oder Carbon-Filme, streifenförmige Grids),
- Erzeugung/Strukturierung von Grids direkt auf dem Substrat (z.B. Druck Techniken oder C-MEMS-Prozess), TEM-Probenhalter.

Um eine Probe im Probenhalter an die Schneidkante zu führen und von dieser Dünnschnitte durch einen Schneidvorgang abzuschälen ist eine Verfahrvorrichtung für eine Relativbewegung zwischen Probenhalter und Schneidkante erforderlich. Hierbei unterscheidet man zwischen einer Bewegung in oder entlang der Schnittrichtung, d.h. für den eigentlichen Schneidprozess, und einer Vorschubrichtung für den Probenhalter, d.h. für die Realisierung einer Zustellung zwischen zwei. Schnitten zur Einstellung der Dicke des jeweiligen Dünnschnitts oder auch zum Zurückfahren der Probe von der Schneidkante in einer Ausrichtung ungleich der Schnittrichtung.

Für die Bewegung in Schnittrichtung weist das Mikrotom eine Verfahrvorrichtung zum Erzeugen einer Relativbewegung zwischen dem Probenhalter und der Schneidkante zum Schneiden der Probe auf. Die Bewegung in Schnittrichtung verläuft vorzugsweise eben auf der Schnittebene, weiter bevorzugt geradlinig. Eine weitere bevorzugte Ausgestaltung sieht einen zweidimensionalen Verlauf der Bewegung auf der Schnittebene vor, vorzugsweise als kreisförmige oder elliptische Bewegung.

Eine Ausgestaltung sieht vor, die Verfahrvorrichtung und/oder die Schneidkante zusätzlich mit einem Schwingungserzeuger, vorzugweise einer Schall- oder Ultraschallquelle auszugestalten, der den Schneidvorgang beim Abschälen der Dünnschnitte von der Probe unterstützt.

Die Bewegung in Schnittrichtung umfasst vorzugsweise auch die Bewegung zurück, d.h. sie beginnt ausgehend von einer Ausgangsposition mit einer Schnittbewegung, umfassend ein Anfahren der Probe an die Schneidkante und das vollständige Abschälen des Dünnschnitts aus der Probe während des Schneidprozesses, bei der die Schneidkante vollständig durch die Probe geschoben wird und diese dabei durchdringt. Nach Erreichen einer Zielposition erfolgt die Bewegung zurück, bei der die Probe zurück in die vorgenannte Ausgangsposition bewegt wird. Soll ein Kontakt der durch das Abschälen des Dünnschnitts auf der Probe entstandenen Schnittfläche mit der Schneidkante bei der Bewegung zurück vermieden werden, wird die Schnittfläche optional noch vor Einleitung der Bewegung zurück durch eine Vorschubbewegung von der Schnittebene weg bewegt.

Die Schichtdicke für die Dünnschnitten wird durch eine Vorschubbewegung in Vorschubrichtung eingestellt. Für die Bewegung in Vorschubrichtung weist das Mikrotom eine Vorschubvorrichtung zum Erzeugen einer Relativbewegung zwischen dem Probenhalter und der Schneideeinheit zum Schneiden der Probe in eine Vorschubrichtung in einem Winkel ungleich 0°,vorzugsweise zwischen 60 und 90° zur Schnittebene auf. Durch diese Bewegung wird der Abstand der Schnittfläche der Probe aus dem vorangegangenen Schnitt zur Schnittebene eingestellt.

Die vorgenannten Relativbewegungen zwischen dem Probenhalter und der Schneideeinheit erfolgen vorzugsweise mittels motorischer Antriebe der Probenhalterungen bei feststehender Schneidkante. Es bietet sich insbesondere bei kleineren oder leichten Proben an, die Verfahrvorrichtung und die Vorschubvorrichtung in einem Kurbeltrieb mit feineinstellbarer variabler Übersetzung zusammenzufassen und in vorteilhafter Weise gemeinsam gegen Verschmutzung zu sichern. Die bewegten Massen umfassen dabei den Probenhalter und die Probe.

Alternative Ausgestaltungen der Vorrichtung weisen getrennte Vorrichtungen für Verfahrvorrichtung und die Vorschubvorrichtung auf. Dabei ist man bestrebt, die bewegten Massen insbesondere bei einer Automatisierung klein zu halten, was wiederum der Schnittgenauigkeit zugutekommt.

Auch ist es insbesondere bei der Herstellung von Dünnschnitten aus großen Proben (besonders kleines Verhältnis aus Schichtdicke zur lateralen Dünnschnittausdehnung) vorteilhaft, die Vorschubvorrichtung und die Verfahrvorrichtung zugunsten einer Sicherstellung einer gleichbleibenden Schichtdicke mechanisch zu trennen.

Das Mikrotom weist ferner ein bis an die Schneidkante auf der dem Probenhalter abgewandten Seite angrenzendes Flüssigkeitsvolumen auf. Das Flüssigkeitsvolumen besteht aus einer Flüssigkeit, vorzugsweise Wasser oder einer wässrigen Lösung, alternativ einem Alkohol (z.B. Ethanol, Glykol etc.). Die Flüssigkeit ist so zu wählen, dass sie die Dünnschnitte weder anlöst noch mit diesen reagiert. Das Flüssigkeitsvolumen weist ferner eine Flüssigkeitsoberfläche auf, die vorzugsweise über die gesamte Schneidkantenlänge vorzugsweise gleichbleibenden Abstand zur Schneidkante aufweist oder weiter bevorzugt bis an die Schneidkante heranreicht.

Ein Merkmal zur Lösung der Aufgabe umfasst einen seitlich auf der dem Probenhalter abgewandten Seite der Schneidkante angeordneten und zur Schneidkante hin und/oder weg verschiebbaren Kanal. Der Kanal und das vorgenannte Flüssigkeitsvolumen befinden sich damit auf der gleichen Seite der Schneidkante, während der Probenhalter mit der Probe auf der anderen Seite angeordnet sind. Der Kanal ist zur Schneidkante hin offen gestaltet. Er ist mit einer Flüssigkeit befüllbar, wobei die Flüssigkeit entweder die vorgenannte Flüssigkeit des Flüssigkeitsvolumens, eine weitere Flüssigkeit oder eine Mischung aus den beiden Flüssigkeiten ist.

Der Kanal weist vorzugsweise einen Kanalboden auf, der durch ein Substrat gebildet wird. Das Substrat bildet vorzugsweise einen Objektträger (weiter bevorzugt starren Objektträger) für mindestens einen Dünnschnitt für eine nachfolgende Licht- und/ oder Elektronenmikroskopie (z.B. Rasterelektronenmikroskopie) und muss für diesen Zweck geeignet sein. Vorzugsweise besteht der Objektträger aus einem transparenten bzw. elektrisch leitfähigen Material (insbes. Indium-Zinnoxid, CNT, Kohlenstoff, WS₂, MoS₂, Heterostrukturen, leitfähige Polymere etc.) beschichtetem Glas oder einem Abschnitt eines Silizium-Wafers (beschichtet oder unbeschichtet).

Weiter bevorzugt ist ein Kanal mit einem Kanalboden vorgesehen, der durch ein Substrat gebildet wird, das für Elektronenstrahlen durchlässig ist und sich somit beispielsweise für Transmissionselektronenstrahlmikroskopie eignet. Dafür kommen die vorgenannten TEM-Substrate (Grids und coated Grid etc.) infrage.

Hierin ist unter einem Wafer ein Substrat zu verstehen. Ein solches Substrat ist derart eingerichtet, dass z.B. zumindest ein elektronischer Chip und/oder mindestens eine integrierte Schaltungen und/oder mindestens ein Verbindungselement, welches zumindest eine elektrisch leitfähige oder elektrooptische Verbindung zwischen solchen Chips und/oder integrierten Schaltungen bereitstellt, darauf gebildet werden kann/können. Ein solches Substrat ist zumindest aus einem Halbleitermaterial aus der Gruppe von Halbleitermaterialien gebildet, wobei diese Gruppe umfasst: insbesondere Silizium, aber auch Germanium, Kohlenstoff oder andere Elementarhalbleiter oder auch Verbindungshalbleiter, wie z.B. SiC, AlN etc., oder organische Halbleiter. Das Substrat kann bspw. als Scheibe, Polyeder, Rechteck oder jeder beliebigen geometrischen Freiform gebildet sein.

Vorzugsweise weist der Kanal insbesondere auf den nicht der Schneidkante zugewandten Seiten mechanische Seitenwandungen auf, die den Kanal und die darin einströmbare Flüssigkeit begrenzen.

Alternative Gestaltungen einer Kanalbegrenzung sehen eine vorzugsweise strukturierte Oberflächenfunktionalisierung des Substrats oder des Kanalbodens vor, vorzugsweise durch eine Unterteilung des Substrats in flüssigkeits- oder wasserabweisende (hydrophobe) und flüssigkeits- bzw. wasseranziehende (hydrophile) Bereiche. Die Oberflächenfunktionalisierung und damit die Anbindbarkeit der Flüssigkeit erfolgt vorzugsweise durch eine Oberflächenstrukturierung, mittels Beschichtungen oder Imprägnierungen oder durch chemische Aktivierung von Substratbereichen. Flüssigkeit und damit die Zugänglichkeit für die Dünnschnitte erstrecken sich somit nur auf die flüssigkeitsanziehenden bzw. hydrophilen Substrat- oder Kanalbodenbereiche, was eine exakte Platzierbarkeit der Dünnschnitte insbesondere mit zunehmend kleinen Kanalabmessungen in vorteilhafter Weise zunehmend begünstigt (Kapillareffekt).

Ist der Kanal zur Schneidkante hingeschoben, dringt das offen gestaltete Ende des Kanals vorzugsweise auch in das Flüssigkeitsvolumen ein. Ist im Kanal zuvor keine Flüssigkeit enthalten, wird er mit der Flüssigkeit des Flüssigkeitsvolumens geflutet. Ist im Kanal zuvor eine Flüssigkeit enthalten, kommt es zu einem Kontakt zwischen der Flüssigkeit im Kanal und im Flüssigkeitsvolumen, wobei die beiden in Kontakt tretenden Flüssigkeiten vorzugsweise identisch oder mischbar sind. In beiden Fällen erstreckt sich eine gemeinsame Flüssigkeitsoberfläche von der Schneidkante über das Flüssigkeitsvolumen in den Kanal, was eine Überführung der Dünnschnitte von der Schneidkante in den Kanal ermöglicht.

Wird der Kanal vorzugsweise mit mindestens einem Dünnschnitt von Schneidkante wieder wegschoben (entfernt), kommt es zu einer Trennung der Flüssigkeiten und der Oberfläche in Kanal und Flüssigkeitsvolumen. Während das Flüssigkeitsvolumen vorzugsweise unverändert an der Schneidkante verbleibt, bildet die Flüssigkeit im Kanal eine separate aus dem Kanal separat evakuierbare oder entfernbare Flüssigkeitsmenge.

Vorzugsweise weist der Kanal Mittel zur Ableitung (z.B. Entfernung, Absaugung) und/oder Einleitung (z.B. Hinzufügen, Zuleitung, Einspeisung) mindestens einer der Flüssigkeiten in/aus dem Kanal auf. Vorzugsweise erfolgt die Absaugung und/oder Einleitung in den Kanalbereichen über eine Vielzahl in den Kanal ausmündenden Öffnungen, vorzugsweise über offenporige Bereiche im Kanal wie z.B. Kanalbegrenzungen, weiter bevorzugt dem Kanalboden oder den Seitenwänden. Durch eine Verteilung der Absaugung und/oder Einleitung auf mehrere Öffnungen minimiert man die Ausbildung von Strömungen im Kanal und damit die Gefahr von unerwünschten Verschiebungen von Dünnschnitten z.B. auf einem Substrat.

Optional wird vorgeschlagen, die Öffnungen so anzuordnen sowie eine Absaugungen oder Zuführung von Flüssigkeit über diese Öffnungen so auszugestalten, dass sich Strömungen im Kanal so ausbilden und so steuern und/oder regeln lassen, sodass diese vorgebbare Manipulationen und Transporte der Dünnschnitte im Kanal ermöglichen.

Weiterhin wird optional vorgeschlagen, über dem Kanal Mittel vorzugsweise mit mindestens einer Düsenaustrittsöffnung zur Erzeugung eines Luftstroms vorzusehen, wobei die mindestens eine Düsenaustrittsöffnung und damit der Luftstrom in den Kanal ausrichtbar sind. Diese Mittel ermöglichen es die Schnitte auf der Flüssigkeitsoberfläche durch einen Luftstrom von oben, Oberflächenwellen, sowie durch ein lateral eingeführtes Substrat (z.B. Folie) zu manipulieren, an das sich die Schnitte durch Ausbildung eines Meniskus anlegen und durch dessen Verschiebung manipulierbar sind.

Das vorgenannte Flüssigkeitsvolumen an der Schneidkante weist vorzugsweise keine 'separaten Mittel zur Absaugung und/oder Einleitung mindestens einer der Flüssigkeiten auf. Das Volumen wird vorzugsweise mittels der Oberflächenspannung der Flüssigkeit oder bei größeren Volumina durch entsprechende Wandungen oder Oberflächenfunktionalisierungen der angrenzenden Bereiche an der Schneidkante stabilisiert. Eine Regulierung der Flüssigkeitsmenge erfolgt vorzugsweise über die Kanäle beim Einschieben eines Kanals in das Flüssigkeitsvolumen, sofern nur eine Flüssigkeit eingesetzt wird. Werden dagegen im Flüssigkeitsvolumen und im Kanal unterschiedliche Flüssigkeiten vorgesehen, sind für eine Speisung des Flüssigkeitsvolumens separate Mittel zur Absaugung und/oder Einleitung mindestens einer der Flüssigkeiten in das Flüssigkeitsvolumen vorzusehen.

Eine weitere bevorzugte Ausführung ist die Anordnung mehrerer Kanäle nebeneinander, vorzugsweise parallel zueinander auf einem gemeinsamen Substrat. Die Kanäle des Substrats werden dann bevorzugt seriell an die Schneidkante und in das Flüssigkeitsvolumen geführt und mit Dünnschichten oder Dünnschichtreihen befüllt. Grundsätzlich erfolgt die Führung der Kanäle dabei wie angegeben durch Hin- und wieder Wegbewegung des offenen Kanalendes an die Schneidkante. Dies erfolgt durch Verschiebung vorzugsweise hin und zurück, d.h. mit Richtungswechsel in gleicher Ausrichtung von der Schneidkante weg, wobei ein Wechsel zum nächsten Kanal durch ein zusätzliches seitliches Weiterschieben des Substrats mit den Kanalöffnungen erfolgt. Eine alternative Ausgestaltung sieht vor, dass die Hin- und Wegbewegung ohne einen Richtungswechsel zu gestalten, beispielsweise indem das Substrat mit den Kanalöffnungen parallel zu der Schneidkante vorbeigezogen wird, d.h. die Hin- und Wegbewegung durch eine bevorzugt laterale und/oder geradlinige Scherbewegung zwischen Kanalöffnung und Schneidkante erfolgt.

Eine bevorzugte Ausgestaltung des Mikrotoms umfasst eine Einrichtung zum Absondern von vereinzelbaren Flüssigkeitstropfen von oben auf die Flüssigkeit oder Dünnschnitte auf der Flüssigkeit über der Schneidkante und/oder dem Kanal. Sie dient insbesondere der Vereinzelung oder Trennung von zwei auf einer Flüssigkeitsoberfläche schwimmenden und adhäsiv aneinanderhängenden Dünnschnitten, nachdem sie an der Schneidkante von der Probe seriell abgeschält und von der Flüssigkeitsoberfläche aufgenommen wurden und sich dort seriell in einer Reihe anordneten. Insbesondere bewirkt ein vereinzelter Tropfen, der in einer Flüssigkeit zwischen zwei seriell auf der Oberfläche über dem Flüssigkeitsvolumen angeordnete Dünnschnitte aufgebracht wird, dass sich die beiden Dünnschnitte voneinander entfernen.

Zur Lösung der Aufgabe wird ferner ein **Verfahren** zum Herstellen von Dünnschnitten aus einer Probe mit einem zuvor beschriebenen Mikrotom vorgeschlagen. Das Verfahren umfasst ferner folgende Verfahrensschritte, vorzugsweise in der angegebenen chronologischen Reihenfolge:
1. Bereitstellung des Mikrotoms der zuvor beschriebenen Art mit dem Probenhalter für die Probe, der Schneidkante zum Schneiden der Probe sowie dem Flüssigkeitsvolumen mit einer an die Schneidkante anschließenden Flüssigkeitsoberfläche.
2. Einspannen der Probe in den Probenhalter, wie zuvor beschrieben.
3. Anfahren des Substrats mit einem Kanal an das Flüssigkeitsvolumen und an die Schneidkante, wobei der Kanal entweder wie zuvor beschrieben durch die Flüssigkeit des Flüssigkeitsvolumens oder durch die Mittel zur Einleitung mit Flüssigkeit befüllt wird oder bereits eine Flüssigkeit enthält. Mit dem Anfahren entsteht eine gemeinsame Flüssigkeitsoberfläche von Flüssigkeitsvolumen und Flüssigkeit im Kanal als Transportmittel für die abgeschälten Dünnschnitte.
4. Ausgehend von der vorgenannten Ausgangsposition Einleiten einer Relativbewegung zwischen der Probe im Probenhalter und der Schneidkante in Schnittrichtung, wobei die Probe an die Schneidkante geführt wird,
5. Einschneiden der Schneidkante durch die Probe, wobei mit einem Schnitt vorzugsweise in der vorgenannten Schneidebene ein Dünnschnitt von der Probe abgeschält wird, wobei auf dem verbleibenden Teil der Probe eine Schnittfläche entsteht. Die Schnittfläche und die Schneidebene bilden vorzugsweise eine gemeinsame Ebene. Die Schneidkante durchdringt die Probe in der Schneideebene vollständig.
6. Aufnahme des Dünnschnitts auf der Flüssigkeitsoberfläche des Flüssigkeitsvolumens. Mit einem Ende bleibt der Dünnschnitt vorzugswiese an der Schneidkante haften. In diesem Fall folgt eine Ablösung des Dünnschnitts von der Schneidkante und einer vollständigen Überführung des Dünnschnitts auf die Flüssigkeitsoberfläche.
7. Transport des Dünnschnitts auf der Flüssigkeitsoberfläche in den Kanal.

Es folgt vorzugsweise ein Entfernen des Kanals mit dem Dünnschnitt von dem Flüssigkeitsvolumen an der Schneidkante. Mit einer anschließenden Entfernung der Flüssigkeit im Kanal durch die vorgenannten Mittel zur Absaugung werden die auf der Flüssigkeitsoberfläche befindlichen Dünnschnitte trockengelegt und auf dem Kanalboden, vorzugsweise einem Substrat oder einem Objektträger positioniert.

Für eine bessere Ablösung eines abgeschälten Dünnschnitts von der Schneidkante werden optional folgende anschließenden Verfahrensschritte vorgeschlagen:
8. Zurückfahren der Probe in die Ausgangsposition.
9. Ausgehend von der vorgenannten Ausgangsposition Einleiten einer Relativbewegung zwischen der Probe im Probenhalter und der Schneidkante in Schnittrichtung, wobei die Probe an die Schneidkante geführt wird,
10. Überfahren der Schneidkante durch den Probenrand, wobei die Schnittfläche auf der Schneidkante gleitet, ohne dass mangels Zustellung der Probe ein erneuter Schnitt entsteht. Dabei löst sich ein ggf. noch an der Schneidkante anhaftender Dünnschnitt.

Alternativ zu den Verfahrensschritten 8 bis 10 lässt sich eine bessere Ablösung eines abgeschälten Dünnschnitts von der Schneidkante über folgende optionale Verfahrensschritte durchführen:
11. Zurückfahren der Probe in die Ausgangsposition.
12. Zustellen des Probenhalters mit der Probe in Vorschubrichtung in eine weitere Ausgangsposition.
13. Anschneiden des nächsten Schnitts bevorzugt wenige Mikrometer, vorzugsweise zwischen 5 und 20 µm in die Probe.
14. Umkehr der Bewegungsrichtung der Schnittvorrichtung und Herausfahren aus dem Schnitt (Hochfahren der Probe). Dabei verbindet sich der an der Schneidkante anhaftende Dünnschnitt mit der Probe adhäsiv, wobei die Probe bei Zurückfahren mitgezogen wird und sich dabei von der Schneidkante löst.
15. Weiteres Zurückfahren der Probe von der Schneidkante, wobei sich der Dünnschnitt auch von der Probe löst und sich auf der Flüssigkeitsoberfläche von der Schneidkante entfernt. '

Werden mehrere Dünnschnitte seriell von einer Probe abgeschält und aufgereiht auf der Flüssigkeitsoberfläche in den Kanal geschoben, umfasst das Verfahren die folgenden weiteren Verfahrensschritte:
16. Zurückfahren der Probe in die Ausgangsposition.
17. Zustellen des Probenhalters mit der Probe in Vorschubrichtung in eine weitere Ausgangsposition.
18. Wiederholung der Schritte 4 bis 7 sowie 16 und 17, wobei die abgeschälten Dünnschnitte seriell auf der Flüssigkeitsoberfläche über dem Flüssigkeitsvolumen angeordnet werden und in den Kanal, d.h. vorzugsweise über das Substrat transportiert werden.
19. Ggf. Manipulation der Schnitte durch laterales Zuführen eines Substrats wodurch sich die Schnitte durch Ausbilden eines Meniskus zwischen Schnitt und Substrat an das Substrat anlegen und somit durch dessen Verschiebung mitbewegt werden können.

Für die Überführung der Dünnschnitte auf das Substrat wird ein Verfahren umfassend mindestens einen der folgenden optionalen Verfahrensschritte vorgeschlagen:
20. Absaugung, Ableitung oder Verdunstung des Flüssigkeitsvolumens von der Schneidkante,
21. Entfernung des Kanals von der Schneidkante und/oder
22. Absaugung, Ableitung oder Verdunstung der Flüssigkeit aus dem Kanal.

Ein besonderer Vorteil des Verfahrens wird dadurch erzielt, dass ein Kanal mit abgeschälten Dünnschnitten von dem Mikrotom entfernbar und einer weiteren Verarbeitung zuführbar ist, während nachfolgende Dünnschnitte durch einen anderen an die Schneidkante angeschobenen Kanal aufgenommen werden können.

Bei einer bevorzugten Anordnung von mehreren nebeneinander liegenden Kanälen auf dem Substrat, wird das Substrat lateral zum nächsten Kanal versetzt, und die Schritte 1 - 7 werden erneut ausgeführt, bis alle Kanäle auf dem Substrate belegt sind. Somit besteht ein weiterer Vorteil darin, dass eine Vielzahl von Dünnschnitten nebeneinander in mehreren Kanälen auf dem Substrat ablegbar ist.

Die Erfindung wird anhand von Ausführungsbeispielen, den folgenden Figuren und Beschreibungen näher erläutert. Die dargestellten Merkmale und deren Kombinationen sind nicht nur auf diese Ausführungsbeispiele und deren Ausgestaltungen begrenzt. Vielmehr sind diese stellvertretend für weitere mögliche, aber nicht explizit als Ausführungsbeispiele dargestellte weitere Ausgestaltungen kombinierbar. Es zeigen
**Fig.1** eine schematische Darstellung (Ansicht links, Draufsicht rechts) einer bevorzugten Ausführungsform eines Mikrotoms mit abgeschälten Dünnschnitten, jedoch ohne Darstellung der Probe und der Probenhalterung,
**Fig.2** ein Ablaufdiagramm eines bevorzugten Verfahrens zum Herstellen von Dünnschnitten aus einer Probe mit Hilfe eines Mikrotoms,
**Fig.3a** **bis h** schematische Darstellungen (Ansicht jeweils links, Draufsicht jeweils rechts, entsprechend zu **Fig.1**) einer bevorzugten Ausführungsform entsprechend der in **Fig.2** dargestellten Verfahrensschritte sowie
**Fig.4** eine schematische Draufsicht eines beispielhaften Substrats, bei dem die Kanäle durch flüssigkeitsanziehende oder hydrophile Bereiche und ohne Seitenwandungen ausgebildet sind.

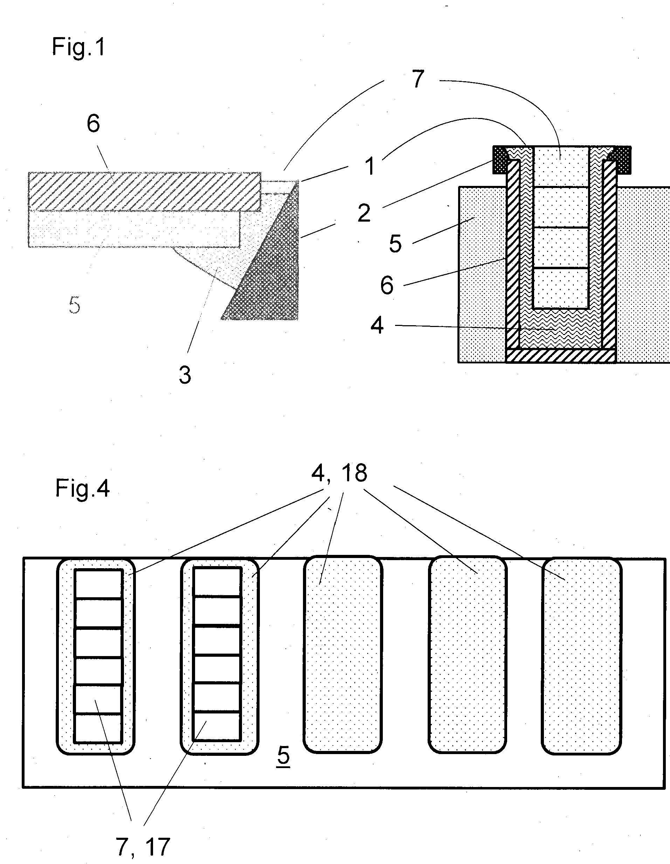

Das in **Fig.1** dargestellte Mikrotom umfasst eine Schneidkante **1,** vorzugsweise aus einem Diamantkeil **2** und einem Flüssigkeitsvolumen **3,** das an die Schneidkante angrenzt. Ferner umfasst das Mikrotom einen Kanal **4** mit Substrat **5** und Seitenwandungen **6,** die wie dargestellt in das Flüssigkeitsvolumen **3** eingeschoben sind. Die Flüssigkeit im Flüssigkeitsvolumen erstreckt sich auch in den Kanal **4.** Auf der Flüssigkeitsoberfläche befinden sich aneinandergereiht vier seriell abgeschälte Dünnschnitte **7** einer nicht weiter dargestellten Probe in einer ebenso nicht dargestellten Probenhalterung.

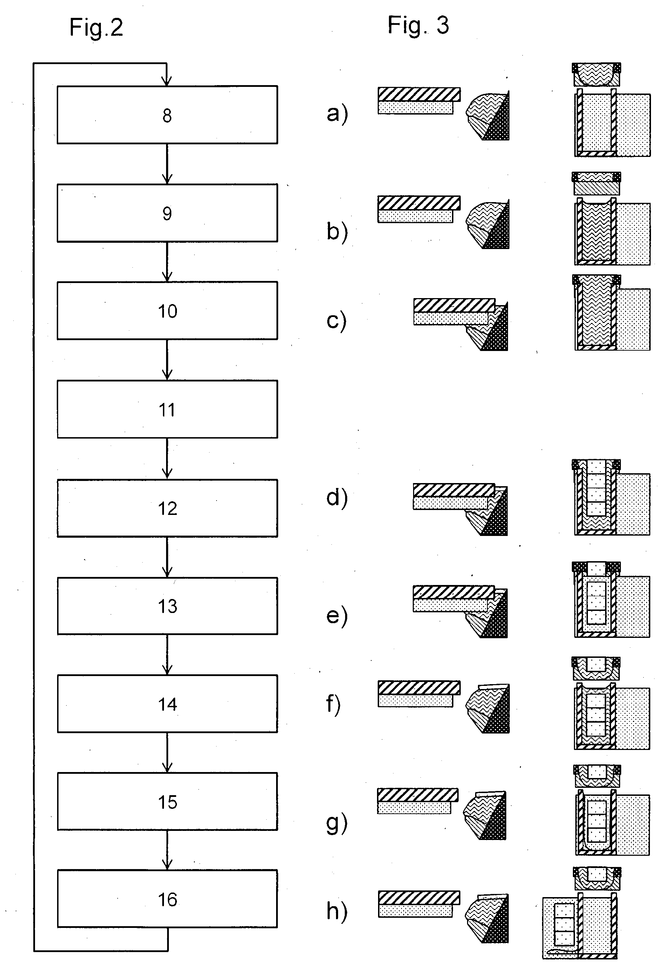

Im Ablaufdiagramm gemäß **Fig.2** sind die einzelnen Verfahrensschritte eines bevorzugten Verfahrens zum Herstellen von Dünnschnitten aus einer Probe mit einem Mikrotom dargestellt. Die einzelnen Schritte werden anhand der **Fig.3a bis 3h** durch eine schematische Darstellung näher erläutert. Die Ansichten und Draufsichten sowie die dargestellten Komponenten in den **Fig.3a bis 3h** entsprechen denen gemäß **Fig.1**, weswegen mit Verweis auf **Fig.1** auf Bezugszeichen verzichtet wurde.

Das beispielhaft dargestellte Verfahren beginnt mit einem Auffüllen des Flüssigkeitsvolumens an der Schneidkante **8** (sofern noch nicht bereits geschehen) sowie einem Auffüllen des Kanals **9** mit Flüssigkeit (z.B. Wasser), der Kanal befindet sich noch außerhalb des sich bildenden Flüssigkeitsvolumens **(****Fig.3a** **und b**). Anschließend erfolgt ein Einschieben des Kanals zur Schneidkante hin, womit es zu einer Vereinigung der Flüssigkeiten in Kanal und Flüssigkeitsvolumen **10** unter Bildung einer gemeinsamen Flüssigkeitsoberfläche kommt (**Fig.3c****,** insbesondere Draufsicht rechts). Es folgt eine Pegelkorrektur der Flüssigkeitsoberfläche **11** durch Einleiten ober Absaugung von vorgenannter Flüssigkeit. Das Mikrotom ist somit Bereit für die Herstellung von Dünnschnitten. Es folgt ein serielles Abschälen mehrerer Dünnschnitte **12** an der Schneidkante, die auf vorgenannter Flüssigkeitsoberfläche als seriell aneinander aufgereihte Dünnschnittfolge in den Kanal geschoben werden **(****Fig.3d****).** Füllt eine Dünnschnittfolge den Kanal in seiner ganzen oder teilweisen Länge aus, erfolgt eine Trennung der Dünnschnittfolge zwischen zwei Dünnschnitten **13** im Bereich des offenen Endes des Kanals mittels einer vorgenannten und nicht weiter abgebildeten Einrichtung zum Absondern von vereinzelbaren Flüssigkeitstropfen von oben auf die Dünnschnitte auf der Flüssigkeit. Der Tropfen, der zwischen zwei seriell auf der Flüssigkeitsoberfläche über dem Flüssigkeitsvolumen angeordnete Dünnschnitte aufgebracht wird, bewirkt, dass sich die beiden Dünnschnitte voneinander entfernen (vgl. **Fig.3e****,** insbesondere Draufsicht rechts). Es erfolgt ein Wegfahren des Kanals von dem Flüssigkeitsvolumen und der Schneidkante **14,** wobei im Beispiel ein Dünnschnitt auf dem Flüssigkeitsvolumen an der Schneidkante verbleibt (vgl. **Fig.3f****,** insbesondere Draufsicht rechts). Der von dem Flüssigkeitsvolumen getrennte Kanal wird anschließend entleert wobei sich die im Kanal befindlichen Dünnschnitte auf dem Substrat auflegen und adhäsiv fixiert werden (**Fig.3g****,** insbesondere Draufsicht rechts). Es folgt eine Bereitstellung eines weiteren Kanals auf demselben Substrat vor der Schneidkante **16 (****Fig.3h****,** insbesondere Draufsicht rechts).

Eine optionale Gestaltung sieht mehrere Kanäle **4** auf einem gemeinsamen Substrat **5** vor, die seriell mit seriellen Dünnschnittreihen **17** befüllbar sind (**Fig.4**). Weiter bevorzugt und in besonders vorteilhaft Platz sparender Weise werden diese Kanäle **4** durch funktionalisierte flüssigkeitsanziehende bzw. hydrophile Bereichsstrukturierung **18** der vorgenannten Art auf einem ansonsten flüssigkeitsabweisenden bzw. hydrophoben Objektträger ohne seitliche mechanische Seitenwandungen um die Kanäle gebildet. Dabei werden die offenen Kanalenden wie dargestellt durch ein Heranreichen der flüssigkeitsanziehenden bzw. hydrophilen Bereichsstrukturierung bis an den Substratrand und weiter bevorzugt für eine bessere fluidische Anbindung an ein Flüssigkeitsvolumen um diesen herum auf die Stirnseiten des Substrats realisiert. Die Befüllung der Kanäle mit Flüssigkeit erfolgt bei dieser Ausgestaltung vorzugsweise über das Flüssigkeitsvolumens, alternativ durch die vorgenannte Einrichtung zum Absondern von vereinzelbaren Flüssigkeitstropfen von oben auf die Dünnschnitte auf der Flüssigkeit (zweckentfremdet, beispielsweise durch eine Pipettenanordnung).

Eine besonders vorteilhafte Ausgestaltung des in **Fig.4** dargestellten Substrats wird dadurch geschaffen, dass die flüssigkeitsanziehende bzw. hydrophile Bereichsstrukturierung auf einem ansonsten flüssigkeitsabweisen bzw. hydrophoben Objektträger durch eine offenporige Substratstruktur gebildet wird. Das im Kanal befindliche Wasser ist so durch die vorgenannten Mittel zur Absaugung und/oder Einleitung einer Flüssigkeit unmittelbar nach einer Trennung vom Fluidvolumen flächig von unten durch die Substratstrukturen unterhalb der Dünnschnittreihen absaugbar.

### Bezugszeichenliste:

- 1: Schneidkante
- 2: Diamantkeil
- 3: Flüssigkeitsvolumen
- 4: Kanal
- 5: Substrat
- 6: Seitenwandungen
- 7: Dünnschnitt
- 8: Auffüllen des Flüssigkeitsvolumens an der Schneidkante
- 9: Auffüllen des Kanals mit Wasser
- 10: Vereinigung der Flüssigkeiten in Kanal und Flüssigkeitsvolumen
- 11: Pegelkorrektur der Flüssigkeitsoberfläche
- 12: Abschälen mehrerer Dünnschnitte
- 13: Trennung der Dünnschnittreihe zwischen zwei Dünnschnitten
- 14: Wegfahren des Kanals von dem Flüssigkeitsvolumen und der Schneidkante
- 15: Entwässerung/Trocknung des Kanals
- 16: Bereitstellung eines weiteren Kanals vor der Schneidkante
- 17: Dünnschnittreihe
- 18: flüssigkeitsanziehende bzw. hydrophile Bereichsstrukturierung

## Patentansprüche

1. Mikrotom zum Herstellen von Dünnschnitten **(7, 17)** aus einer Probe, umfassend
a) einen Probenhalter zur Aufnahme der Probe,
b) eine Schneidkante **(1)** mit einer vorgegebenen Schnittrichtung zum Schneiden der Probe, wobei die Schnittrichtung und die Schneidkante eine Schnittebene aufspannen,
c) eine Verfahrvorrichtung zum Erzeugen einer Relativbewegung zwischen dem Probenhalter und der Schneideeinheit zum Schneiden der Probe in Schnittrichtung,
d) eine Vorschubvorrichtung zum Erzeugen einer Relativbewegung zwischen dem Probenhalter und der Schneideeinheit zum Schneiden der Probe in eine Vorschubrichtung in einem Winkel ungleich 0° zur Schnittebene,
e) ein bis an die Schneidkante auf der dem Probenhalter abgewandten Seite angrenzendes Flüssigkeitsvolumen **(3)** mit einer Flüssigkeit sowie
f) ein seitlich auf der dem Probenhalter abgewandten Seite der Schneidkante angeordneter und mit der Flüssigkeit und/oder einer weiteren Flüssigkeit befüllbarer Kanal,
**dadurch gekennzeichnet, dass** der Kanal zur Schneidkante zumindest über eine Hin- und/oder Wegbewegung hin und/oder weg verschiebbar ist, und wobei der Kanal zur Schneidkante hin als offenes Kanalende offen ist.

2. Mikrotom nach Anspruch 1, **dadurch gekennzeichnet, dass** der Kanal ein Substrat **(5)** als Kanalboden aufweist.

3. Mikrotom nach Anspruch 2, **dadurch gekennzeichnet, dass** das offene Kanalende über einen Rand des Substrats angeordnet ist.

4. Mikrotom nach Anspruch 2 oder 3, **dadurch gekennzeichnet, dass**, das Substrat **(5)** für Licht- und/oder Elektronenmikroskopie geeignet ist, und durch einen Objektträger, vorzugsweise einen Objektträger aus einem elektrisch leitfähigen Material oder einem Material, das transparent für Licht und/oder Elektronen ist, oder einen mit einem elektrisch leitfähigen Material beschichteten Glas oder Silizium-Wafer oder ein Netz oder Grid gebildet ist.

5. Mikrotom nach einem der vorgenannten Ansprüche 2 bis 4, **dadurch gekennzeichnet, dass** auf dem Substrat mehrere Kanäle nebeneinander angeordnet sind.

6. Mikrotom nach einem der vorgenannten Ansprüche, **dadurch gekennzeichnet, dass** der Kanal über dem Substrat **(5)** abseits der Schneidkante durch mechanische Seitenwandungen **(6)** oder durch eine strukturierte Oberflächenfunktionalisierung **(18)** des Substrats auf dem Substrat begrenzt ist.

7. Mikrotom nach einem der vorgenannten Ansprüche, **dadurch gekennzeichnet, dass** Mittel zur Absaugung und/oder Einleitung mindestens einer der Flüssigkeiten in/aus dem Kanal **(4)** vorgesehen sind.

8. Mikrotom nach Anspruch 7, **dadurch gekennzeichnet, dass** die Mittel offenporige Bereiche im Kanal **(4)** umfassen.

9. Mikrotom nach einem der vorgenannten Ansprüche, **dadurch gekennzeichnet, dass** eine Einrichtung zum Absondern von vereinzelbaren Flüssigkeitstropfen von oben auf die Flüssigkeit oder Dünnschnitten **(7, 17)** auf der Flüssigkeit über der Schneidkante **(1)** und/oder dem Kanal **(4)** vorgesehen ist.

10. Mikrotom nach einem der vorgenannten Ansprüche, **dadurch gekennzeichnet, dass** die Hin- und/oder Wegbewegung eine laterale und/oder geradlinige Scherbewegungen zwischen Kanalöffnung und Schneidkante umfasst.

11. Verfahren zum Herstellen von Dünnschnitten aus einer Probe mit Hilfe eines Mikrotoms nach einem der vorgenannten Ansprüche, umfassend die folgenden Verfahrensschritte:
a) Bereitstellung des Mikrotoms mit dem Probenhalter für die Probe, der Schneidkante zum Schneiden der Probe sowie dem Flüssigkeitsvolumen mit einer an die Schneidkante anschließenden Flüssigkeitsoberfläche,
b) Einspannen der Probe in den Probenhalter,
c) Anfahren des Kanals an das Flüssigkeitsvolumen und an die Schneidkante,
d) Ausgehend von einer Ausgangsposition Einleiten einer Relativbewegung zwischen der Probe im Probenhalter und der Schneidkante in Schnittrichtung, wobei die Probe an die Schneidkante geführt wird,
e) Einschneiden der Schneidkante durch die Probe, wobei mit einem Schnitt ein Dünnschnitt von der Probe abgeschält wird, wobei auf dem verbleibenden Teil der Probe eine Schnittfläche entsteht,
f) Aufnahme des Dünnschnitts auf der Flüssigkeitsoberfläche des Flüssigkeitsvolumens sowie
g) Transport des Dünnschnitts auf der Flüssigkeitsoberfläche in den Kanal.

12. Verfahren nach Anspruch 11, umfassend die weiteren Verfahrensschritte:
h) Zurückfahren der Probe in die Ausgangsposition,
i) Zustellen des Probenhalters mit der Probe in Vorschubrichtung in eine weitere Ausgangsposition sowie
j) Wiederholung der Schritte d) bis i),
wobei
k) die abgeschälten Dünnschnitte seriell auf der Flüssigkeitsoberfläche über dem Flüssigkeitsvolumen angeordnet werden und in den Kanal transportiert werden.

13. Verfahren nach Anspruch 12, **dadurch gekennzeichnet, dass** mindestens ein vereinzelter Tropfen einer Flüssigkeit zwischen zwei seriell auf der Oberfläche über dem Flüssigkeitsvolumen angeordnete Dünnschnitte aufgebracht werden, womit sich die beiden Dünnschnitte voneinander entfernen.

14. Verfahren nach einem der Ansprüche 11 bis 13, umfassend die weiteren Verfahrensschritte zwischen Verfahrensschritte i) und j):
l) Ausgehend von einer Ausgangsposition Einleiten einer Relativbewegung zwischen der Probe im Probenhalter und der Schneidkante in Schnittrichtung, wobei die Probe an die Schneidkante geführt wird,
m) Einschneiden der Schneidkante zwischen 2 und 1000 µm, vorzugsweise zwischen 5 und 20 µm in die Probe,
n) Umkehr der Relativbewegung mit Hochfahren der Probe,
o) weiteres Hochfahren der Probe von der Schneidkante in Ausgangsposition.

15. Verfahren nach einem der Ansprüche 11 bis 14 umfassend mindestens eines der anschließenden Verfahrensschritte:
p) Absaugung, Ableitung oder Verdunstung des Flüssigkeitsvolumens von der Schneidkante,
q) Entfernung des Kanals von der Schneidkante und/oder
r) Absaugung, Ableitung oder Verdunstung der Flüssigkeit aus dem Kanal.

## Claims

1. Microtome for producing thin sections (7, 17) from a sample, comprising
a) a sample retainer for holding the sample,
b) a cutting edge (1) having a specified cutting direction for cutting the sample, wherein the cutting direction and the cutting edge span a cutting plane,
c) a movement device for producing a relative movement between the sample retainer and the cutting unit for cutting the sample in the cutting direction,
d) an advancing device for producing a relative movement between the sample retainer and the cutting unit for cutting the sample in an advancing direction at an angle not equal to 0° to the cutting plane,
e) a liquid volume (3) having a liquid, adjoining the cutting edge facing away from the sample retainer, and
f) a channel, which is arranged on the side of the cutting edge facing away from the sample retainer and which can be filled with the liquid and/or a further liquid,
**characterised in that** the channel can be displaced towards and/or away from the cutting edge at least by means of one movement towards and/or away from it, and wherein the channel is open towards the cutting edge as an open channel end.

2. Microtome according to claim 1, **characterised in that** the channel comprises a substrate (5) as a channel floor.

3. Microtome according to claim 2, **characterised in that** the open channel end is arranged above an edge of the substrate.

4. Microtome according to claim 2 or 3, **characterised in that** the substrate (5) is suitable for light microscopy and/or electron microscopy, and is formed by an object retainer, preferably an object retainer formed of an electrically conductive material or a material which is transparent to light and/or electrons, or a glass coated with an electrically conductive material, or a silicon wafer, or a net or grid.

5. Microtome according to any one of the preceding claims 2 to 4, **characterised in that** several channels are arranged next to one another on the substrate.

6. Microtome according to any one of the preceding claims, **characterised in that** the channel is delimited over the substrate (5) on the other side of the cutting edge by mechanical side walls (6) or by a structured surface functionalising (18) of the substrate.

7. Microtome according to any one of the preceding claims, **characterised in that** means are provided for suctioning and/or introducing at least one of the liquids into/out of the channel (4).

8. Microtome according to claim 7, **characterised in that** the means comprise open-pore regions in the channel (4).

9. Microtome according to any one of the preceding claims, **characterised in that** a device is provided for the separating of isolated liquid drops from above onto the liquid or thin layers (7, 17), on the liquid over the cutting edge (1) and/or the channel (4).

10. Microtome according to any one of the preceding claims, **characterised in that** the movement towards and away comprises lateral and/or straight line shear movements between the channel opening and the cutting edge.

11. Method for producing thin layers from a sample with the aid of a microtome according to any one of the preceding claims, comprising the following process steps:
a) Preparation of the microtome with the sample retainer for the sample, the cutting edge for cutting the sample, and the liquid volume with a liquid surface connecting to the cutting edge,
b) tensioning the sample in the sample retainer,
c) moving the channel to the liquid volume and to the cutting edge,
d) starting from a starting position, initiating a relative movement between the sample in the sample retainer and the cutting edge in the cutting direction, wherein the sample is guided to the cutting edge,
e) cutting of the cutting edge through the sample, wherein, with one cut, a thin section is peeled off from the sample, wherein a cut surface is produced on the remaining part of the sample,
g) receiving the thin section on the liquid surface of the liquid volume, and transport of the thin section on the liquid surface into the channel.

12. Method according to claim 11, comprising the further method steps:
h) Moving the sample back into the starting position,
i) placing the sample retainer with the sample in the advance direction into a further starting position, and
j) repetition of steps d) to i),
k) the peeled thin sections are arranged in series on the liquid surface over the liquid volume, and are transported into the channel.

13. Method according to claim 12, **characterised in that** at least one isolated drop of a liquid is applied between two thin sections arranged in series on the surface over the liquid volume, wherein the two thin sections are at a distance from one another.

14. Method according to any one of claims 11 to 13, comprising the further method steps between method steps i) and j):
I) starting from a starting position, initiating a relative movement between the sample in the sample retainer and the cutting edge in the cutting direction, wherein the sample is guided to the cutting edge,
m) cutting of the cutting edge into the sample by between 2 and 1000 µm, preferably by between 5 and 20 µm,
n) reversing of the relative movement with the sample being moved upwards,
o) further upwards movement of the sample from the cutting edge into the starting position.

15. Method according to any one of claims 11 to 14, comprising at least one of the following method steps:
p) Suction extraction, draining, or evaporation of the liquid volume from the cutting edge,
q) removal of the channel from the cutting edge and/or
r) suction extraction, draining, or evaporation of the liquid volume from the channel.

## Revendications

1. Microtome pour réaliser des coupes minces (7, 17) d'un échantillon comprenant :
a) un support d'échantillons pour recevoir l'échantillon,
b) une arête de coupe (1) ayant une direction coupe prédéfinie pour couper l'échantillon, la direction de coupe et l'arête de coupe soutendant un plan de coupe,
c) un dispositif mobile pour réaliser un mouvement relatif entre le support d'échantillon et l'unité de coupe pour couper l'échantillon dans la direction de coupe,
d) un dispositif d'avance pour réaliser un mouvement relatif entre le support d'échantillon et l'unité de coupe, pour couper l'échantillon dans la direction d'avance selon un angle différent de 0° par rapport au plan de coupe,
e) un volume de liquide (3) avec un liquide adjacent à l'arête de coupe sur le côté non tourné vers le support d'échantillon, et
f) un canal prévu latéralement sur le côté de l'arête de coupe opposé au support d'échantillon et qui peut être rempli avec le liquide et/ou un autre liquide,
microtome **caractérisé en ce que**
le canal coulisse au moins par un mouvement d'aller et/ou de retour vers et/ ou à partir de l'arête de coupe, et
le canal est ouvert vers l'arête de coupe par une extrémité de canal ouvert.

2. Microtome selon la revendication 1,
**caractérisé en ce que**
le canal a un support (5) comme fond de canal.

3. Microtome selon la revendication 2,
**caractérisé en ce que**
l'extrémité ouverte du canal est prévue sur un bord du support.

4. Microtome selon la revendication 2 ou 3,
**caractérisé en ce que**
le support (5) est prévu pour la microscopie optique et/ou électronique et est réalisé par un support d'objet, de préférence un support d'objet en une matière électro-conductrice ou une matière transparente à la lumière et/ou aux électrons ou un verre revêtu d'une matière électro-conductrice ou d'une puce de silicium ou un réseau ou une grille.

5. Microtome selon l'une des revendications 2 à 4,
**caractérisé en ce que**
le support comporte plusieurs canaux juxtaposés.

6. Microtome selon l'une des revendications précédentes,
**caractérisé en ce que**
le canal est délimité au-delà de l'arête de coupe par des parois latérales mécaniques (6) ou par une fonctionnalité de la surface supérieure (18), structurée du support (5).

7. Microtome selon l'une des revendications précédentes,
**caractérisé par**
des moyens pour aspirer et/ou fournir au moins l'un des liquides dans ou à partir du canal (4).

8. Microtome selon la revendication 7,
**caractérisé en ce que**
les moyens comportent des zones à pores ouverts dans le canal (4).

9. Microtome selon l'une des revendications précédentes,
**caractérisé par**
une installation pour séparer des gouttes de liquide, individualisables à partir du dessus sur le liquide ou les coupes minces (7, 17) sur le liquide sur l'arête de coupe (1) et/ou le canal (4).

10. Microtome selon l'une des revendications précédentes,
**caractérisé en ce que**
le mouvement d'aller et/ou retour comprend un mouvement de cisaillement latéral et/ou en ligne droite entre l'ouverture du canal et l'arête de coupe.

11. Procédé pour réaliser des coupes minces d'un échantillon à l'aide d'un microtome selon l'une des revendications précédentes, consistant à effectuer les étapes de procédé suivantes :
a) fournir le microtome avec un support d'échantillon pour l'échantillon, l'arête de coupe pour couper l'échantillon ainsi qu'un volume de liquide avec une surface de liquide adjacente à l'arête de coupe,
b) fixer l'échantillon dans le support d'échantillon,
c) rapprocher le canal du volume de liquide et de l'arête de coupe,
d) partant d'une position de départ, commencer un mouvement relatif entre l'échantillon dans le support d'échantillon et l'arête de coupe dans la direction de coupe, l'échantillon étant guidé sur l'arête de coupe,
e) entailler avec l'arête de coupe l'échantillon, en pelant par une coupe, une coupe mince de l'échantillon, la partie restante de l'échantillon formant une surface de coupe,
f) prendre la couche mince sur la surface du dessus du liquide dans le volume de liquide, et
g) transporter la couche mince sur la surface du dessus du liquide dans le canal.

12. Procédé selon la revendication 11,
comprenant les étapes suivantes consistant à :
h) remettre l'échantillon en position de départ,
i) mettre le support avec l'échantillon dans la direction d'avance, dans une autre position de départ, et
j) répéter les étapes d)-i),
selon lequel
k) les coupes minces pelées sont mises en série sur la surface du dessus du liquide au-dessus du volume de liquide et les transporter dans le canal.

13. Procédé selon la revendication 12,
**caractérisé en ce que**
on applique au moins des gouttes individualisées d'un liquide entre deux coupes minces placées en série sur la surface du dessus du volume de liquide, les deux coupes minces se séparant l'une de l'autre.

14. Procédé selon l'une des revendications 11 à 13,
comprenant les autres étapes de procédé entre les étapes i) et j) consistant à :
l) partant d'une position de départ, commencer un mouvement relatif entre l'échantillon dans le support d'échantillon et l'arête de coupe dans la direction de coupe, l'échantillon étant conduit sur l'arête de coupe,
m) entailler l'échantillon avec l'arête de coupe entre 2 et 1000 µm et de préférence entre 5 et 20 µm,
n) inverser les mouvements relatifs en remontant l'échantillon,
o) continuer la remontée de l'échantillon par rapport à l'arête de coupe en position de départ.

15. Procédé selon l'une des revendications 11 à 14,
comprenant au moins l'une des étapes de procédé suivantes consistant à :
p) aspirer, évacuer et réduire le volume de liquide de l'arête de coupe,
q) écarter le canal par rapport à l'arête de coupe, et/ou
r) aspirer, évacuer et réduire le liquide du canal.
